# EUROPEAN PATENT SPECIFICATION

(11) **EP 1 496 096 B1**
(45) Date of publication and mention of the grant of the patent: **12.12.2012**
(21) Application number: 04253947.8
(22) Date of filing: 30.06.2004
(51) Int. Cl.: C09K 8/32, C09K 8/36, B01F 17/00

(54) **Additive for oil-based drilling fluids**
Zusatzmittel für auf Öl basierende Bohrflüssigkeiten
Additif pour fluide de forage à base d'huile

(30) Priority: 01.07.2003 US 611009
(43) Date of publication of application: 12.01.2005
(60) Divisional application: 10185433.9
(73) Proprietor: HALLIBURTON ENERGY SERVICES, INC., Duncan, Oklahoma 73536 (US)
(72) Inventor: Kirsner, Jeff, Crossing Humble, Texas 77396 (US); Miller, Jeff, Tomball, Texas 77377 (US); Bracken, Jon, New Waverly, Texas 77358 (US)
(74) Representative: Turner, Craig Robert

(56) References cited:
- WO-A-03/038008

## Description

The present invention relates to methods for drilling boreholes in subterranean formations, particularly hydrocarbon bearing formations, and to drilling fluids for use in such drilling operations. More particularly, the present invention relates to oil or synthetic based drilling fluids, fluids comprising invert emulsions, and more particularly drilling fluid additives that facilitate or enhance emulsification, electrical stability or filtration properties of the drilling fluid.

A drilling fluid or mud is a specially designed fluid that is circulated through a wellbore as the wellbore is being drilled to facilitate the drilling operation. The various functions of a drilling fluid include removing drill cuttings from the wellbore, cooling and lubricating the drill bit, aiding in support of the drill pipe and drill bit, and providing a hydrostatic head to maintain the integrity of the wellbore walls and prevent well blowouts. Specific drilling fluid systems are selected to optimize a drilling operation in accordance with the characteristics of a particular geological formation.
Oil or synthetic-based muds, or invert emulsions, are normally used to drill swelling or sloughing shales, salt, gypsum, anhydrite or other evaporite formations, hydrogen sulfide-containing formations, and hot (greater than about 300 degrees Fahrenheit (about 141°C)) holes, but may be used in other holes penetrating a subterranean formation as well. These on-aqueous based drilling fluids typically contain oil or a synthetic oil or other synthetic material or synthetic fluid ("synthetic") as the continuous phase and may also contain water which is dispersed in the continuous phase by emulsification so that there is no distinct layer of water in the fluid. The term "oil mud" or "oil or synthetic-based mud" typically means an invert oil or synthetic mud emulsion or invert emulsion. An all oil mud simply comprises 100% oil by volume as the liquid phase; that is, there is no aqueous internal phase. An invert emulsion drilling fluid may commonly comprise between about 50:50 to 95:5 by volume oil phase to water phase.
Most commonly, invert emulsions used in drilling typically comprise: a base oil or synthetic fluid for the external phase; a saline, aqueous solution for the internal phase (typically a solution comprising about 30% calcium chloride); and other agents or additives for suspension, fluid loss, density, oil-wetting, emulsification, filtration, and rheology control. With space at some well sites limited, such as on offshore platforms, and with increasing costs of transport of materials to a wellsite, there is industry-wide interest in, and on-going need for, more efficient and concentrated drilling fluid additives and for drilling fluids which can be formulated and maintained with minimal or fewer additives than common with prior art drilling fluids.

An improved and more efficient material or product and method is disclosed for providing emulsion stability and filtration control to invert emulsions and other oil or synthetic based drilling fluids for use in drilling boreholes in subterranean formations, particularly hydrocarbon bearing formations.
The product of the invention has the advantage of a pour point at temperatures as low as about 20 degrees Fahrenheit (-6.67°C) with minimal solvent. Thus, the product of the invention may be transported in a highly (about 90% to about 100%) active state, which reduces the need to inventory products containing different solvents for compatibility with the drilling fluid. This advantage further eliminates the need for shipping large amounts of inert material. Moreover, the product of the invention has the further advantage ofproviding high levels offiltration control to a drilling fluid made with conventional emulsifiers, especially at temperatures up to about 250 °F (121°C) Still further, the product of this invention, when added to drilling fluids, reduces or eliminates the need for conventional fluid loss additives.

The product for this invention comprises two primary components or parts. One part is a wetting agent and the other part is itself a mixture obtainable by, or obtained by the Diels-Alder reaction of dienophiles, preferably carboxylic acids, carboxylic acids, acid anhydrides, or combinations or mixes thereof, with a mixture of fatty acids and resin acids. These two components or parts are blended or mixed and further reacted with cations to form soaps. This blending or mixing and this saponification reaction may be achieved in the manufacturing process or it may be effected "in situ" by the presence of or addition of cations to the drilling fluid. As used herein, the term "in situ" shall be understood to mean in the drilling fluid. Typically, such blending and the saponification reaction will occur in the drilling fluid when the drilling fluid is being prepared for use as a drilling fluid or when the drilling fluid is in use as a drilling fluid in drilling a borehole in a subterranean formation. Drilling fluids commonly comprise cations. Sources of such cations include, without limitation, lime, quicklime, and calcium chloride, among others. Further, drilling fluids may incorporate cations contacted in or available from the subterranean formation itself.
The method of the invention employs the product of the invention for improved drilling fluids and improved drilling of boreholes in subterranean formations.

According to one aspect of the invention there is provided a drilling fluid comprising a wetting agent and a product produced by the Diels-Alder reaction of dienophiles with a mixture of fatty acids and resin acids, wherein the drilling fluid is free of any carboxylic acid-terminated polyamide.
The drilling fluid is preferably oil or synthetic based. The dienophiles are preferably selected from the group consisting of carboxylic acids, polycarboxylic acids, acid anhydrides, and mixtures thereof, and are most preferably maleic anhydride. The mixture of fatty acids and resin acids are preferably derived from the distillation of tall oil, preferably crude tall oil.
The mixture preferably has a ratio of fatty acids to resins acids ranging from about 4:1 to about 1:1, more preferably about 2:1. The ratio of wetting agent to said mixture is about 1:5 to about 1:1, more preferably about 1:2 to about 1:3.
The product is preferably saponified. The saponification is preferably effected with calcium chloride, lime, quicklime, or other sources of calcium cations. In an embodiment, the saponification occurs in situ. In another embodiment, the saponification occurs before said blend is added to said drilling fluid.
The drilling fluid may further comprise lime, calcium chlorides, quicklime, or other saponifying agents.

The drilling fluid described above may be used to provide a number of functions, in particular: filtration control; emulsification; and/or electrical stability.
According to another aspect of the invention there is provided a method for drilling a borehole in a subterranean formation, said method comprising employing an oil or synthetic based drilling fluid comprising an invert emulsion and an additive comprising a wetting agent and a product produced by the Diels-Alder reaction of compounds or reagents with a mixture of fatty acids and resin acids wherein said compounds or reagents are selected from the group consisting of carboxylic acids, polycarboxylic acids, acid anhydrides and combinations or mixes thereof, wherein the drilling fluid is free of any carboxylic-acid terminated polyamide.
The drilling fluid may have any combination of the features of the drilling fluid described above.
The mixture preferably comprises fatty acids and resin acids derived from the distillation of tall oil, preferably tall oil.
The mixture preferably has a ratio of fatty acids to resin acids ranging from about 4:1 to about 1:1, more preferably 2:1. The ratio of said wetting agent to said product is preferably about 1:5 to about 1:1, more preferably about 1:2 to about 1:3.
Preferably, the product is saponified using, for example, calcium chloride, lime, quicklime, or other sources of calcium cations. The saponification may occur in situ or before the product is added to the drilling fluid.
In an embodiment, the product and/or the wetting agent is added to said drilling fluid in the borehole.
In an embodiment, the product and/or the wetting agent is added to said drilling fluid at the well surface.
In an embodiment, the product and/or the wetting agent is added to said drilling fluid when the drilling fluid is prepared.
In an embodiment, the wetting agent and the product are blended together before addition to the drilling fluid.
In an embodiment, the drilling step comprises at least one step selected from the group consisting of: drilling a borehole in a subterranean formation; completing a borehole in a subterranean formation; testing a borehole in a subterranean formation; servicing a borehole in a subterranean formation; and producing fluid from a borehole in a subterranean formation. The drilling step preferably comprises drilling a borehole in a subterranean formation, completing said borehole, and producing fluid from said borehole.
According to another aspect of the invention there is provided a method for improving or facilitating the emulsification of a drilling fluid, said method comprising adding to said drilling fluid a wetting agent and a product produced by the Diels-Alder reaction of dienophiles with a mixture of fatty acids and resin acids, wherein the drilling fluid is free of any carboxylic acid-terminated polyamide.
The wetting agent and the product are preferably blended together before addition to the drilling fluid.
The wetting agent and the product may have any combination of the features of the wetting agent and the product described above. In particular, the dienophiles are preferably selected from the group consisting of carboxylic acids, polycarboxylic acids, acid anhydrides, and combinations or mixes thereof.
According to another aspect of the invention there is provided a method for improving the filtration properties of an oil or synthetic based drilling fluid or a drilling fluid comprising an invert emulsion, said method comprising adding to said drilling fluid a wetting agent and a product produced by the Diels-Alder reaction of dienophiles with a mixture of fatty acids and resin acids, wherein the drilling fluid is free of any carboxylic acid-terminated polyamide.
The wetting agent and the product may have any combination of the features of the wetting agent and the product described above. In particular, the dienophiles are preferably selected from the group consisting of carboxylic acids, polycarboxylic acids, acid anhydrides, and combinations or mixes thereof.
Preferably, the wetting agent and the product are blended in situ the drilling fluid.
According to another aspect of the invention there is provided a method for improving the electrical stability of an oil or synthetic based drilling fluid, or a drilling fluid comprising an invert emulsion, said method comprising adding to said fluid a wetting agent and a product produced by the Diels-Alder reaction of dienophiles with a mixture of fatty acids and resin acids, wherein the drilling fluid is free of any carboxylic acid-terminal polyamide.
The wetting agent and the product may have any combination of the features of the wetting agent and the product described above. In particular, the dienophiles are preferably selected from the group consisting of carboxylic acids, polycarboxylic acids, acid anhydrides, and combinations or mixes thereof.

Reference is now made to the accompanying drawings, in which:
Figure 1 is a graph comparing the electrical stability of a synthetic based drilling fluid containing BDF-258™ with the same synthetic based drilling fluid containing conventional emulsifiers instead of BDF-258™, using data from Tables 1 and 2.
Figure 2 is a graph comparing HTHP filtration of a synthetic based drilling fluid containing BDF-258™ with the same synthetic based drilling fluid containing conventional emulsifiers instead of BDF-258™, using data from Tables 3 and 4.

The product of the invention comprises a blend, mixture, or a combination (hereinafter "blend) of: (1) a wetting agent ("Component 'A"');
and (2) a mixture or reaction product ("Component 'B"') produced by the Diels-Alder reaction of dienophiles, preferably carboxylic acids, polycarboxylic acids, and anhydrides, or combinations or mixes thereof, with a mixture of fatty acids and resin acids. Component B has a ratio of fatty acids to resin acids preferably ranging from about 4:1 to about 1:1 and a most preferred ratio of about 2:1 and is preferably comprised of fatty acids and resin acids derived from the distillation of crude tall oil.

Any wetting agent that provides a wetting function in a drilling fluid and preferably that is environmentally acceptable for use in a drilling fluid may be used as Component A in the blend comprising the product of the invention. Examples of such wetting agents include, without limitation, quaternary ammonium salt, lecithin, and sodium dodecylbenzene sulfonate.
In comprising the product of the invention, the preferred ratio of Component A to Component B is about 1:5 to about 1:1. Ratios of Component A to Component B of about 1:2 to about 1:3 are most preferred. The exact ratio of these two components or parts may vary greatly depending on the exact desired characteristics of the product. Preferably, however, the quantity of Component B will exceed the quantity of Component A.

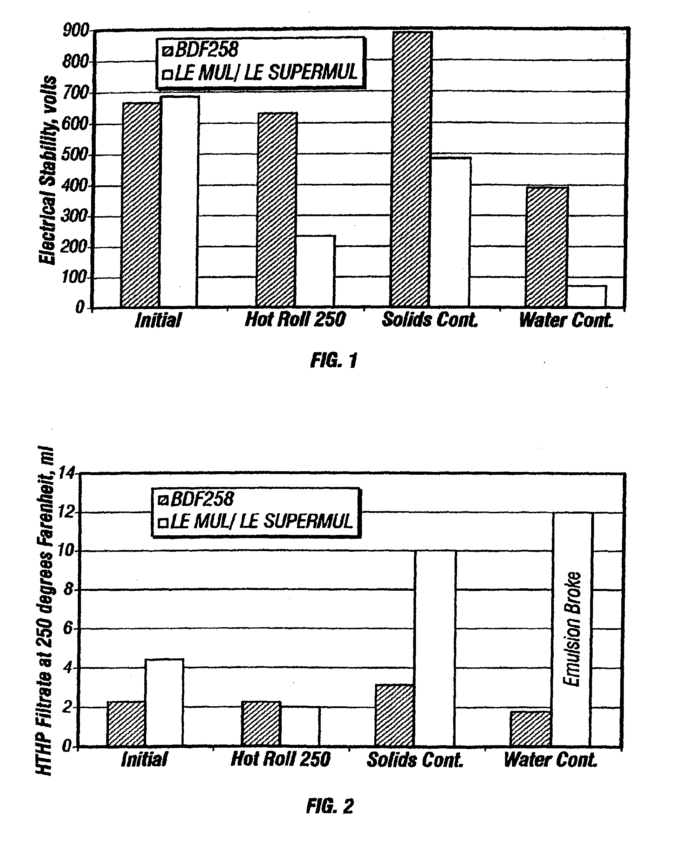

The blend comprising the product of the invention is preferably made by blending, mixing, or combining these two components the wetting agent, and the Diels-Alder modified fatty acid/resin acid mixture or reaction product--together. After blending, the wetting agent, and the fatty acid/resin acid components, are reacted with cations to form soaps. The fatty acids/resin acids may undergo some saponification . Such blending and saponification may be achieved as part of the manufacturing process of the product of the invention or may be effected in situ the drilling fluid by the presence or addition of cations to the drilling fluid. Calcium cations are preferred and may be obtained, for example, by reacting the modified fatty acid/resin acid component with lime, quicklime, or calcium chloride. The blending in the drilling fluid may occur when the drilling fluid is prepared, when the drilling fluid is at the well surface, or after the drilling fluid has been pumped into the wellbore. When blending in the wellbore, the components may be added to the drilling fluid separately or together.
Tall oil is a commonly known product made from acid treatment of alkaline liquors obtained from the manufacture of wood pulp, and tall oil and its derivatives have previously been used in oil-well drilling muds. However, the modified fatty acid/resin acid component of the blend of the product of the invention alone is not effective for achieving the advantages of the invention. EZMUL® is known to have utility as an emulsifier for oil based drilling fluids. . In the combination disclosed, however, the blend (or mixture) comprising the product of the invention provides a marked advance in the art.
Similarly, wetting agents are known to have utility in oil-based drilling fluids. However, wetting agents alone cannot achieve all of the advantages of the product of the invention. In the combination disclosed, however, the blend comprising the product of the invention provides superior performance.
The product of the invention is a powerfully efficient additive for oil or synthetic based drilling fluids, affording or effecting enhanced emulsification, and improved electrical stability and fluid loss control, with significantly less volume of additive than previously known or available with prior art drilling fluid additives. The product effects or helps facilitate emulsification typically in amounts of about one-third the quantity commonly needed for emulsification of oil or synthetic based fluids with prior art emulsifiers. That is, amounts of about three pounds to about five pounds of the product of the invention per barrel of drilling fluid can be effective for emulsification. Even lower quantities can improve the electrical stability and filtration control of drilling fluids, even if already emulsified with other emulsifiers.
The product of the invention does not rely on a carrier. The material comprising the product is highly active and is believed to be useful with all or substantially all synthetic and oil-based systems known to be effective for drilling fluids. The product of the invention may also add viscosity to the drilling fluid and thus is preferably added to the base drilling fluid before any weighting agents such as barite, for example, are added.
The product of this invention is stable even at temperatures up to (and including) about 250 degrees Fahrenheit (about 121°C) without filtration additives and up to about 300 degrees to about 350 degrees Fahrenheit (about 149°C to abouts 177°C) with filtration additives. Combining a wetting agent as Component A may improve the rheological stability of the product of the invention at temperatures up to about 300°F (about 149°C). Using a wetting agent as component A, along with Component B, to comprise the product of the invention in an emulsifier package may also improve the oil-wetting nature of the drilling fluid in some base oils or synthetic and/or at certain reservoir conditions. For example, in a hostile or difficult offshore environment, a particular drilling fluid comprising the product of the invention might show enhanced performance upon addition of a wetting agent to the product of the invention, or more particularly or preferably to Component A, while the same drilling fluid in a different environment might show no improvement upon such addition of wetting agent.
The product of the invention has a high acid value. Consequently, improved results may be seen when a neutralizer or neutralizing agent is added to the drilling fluid. For example, a preferred maximum of about eight pounds of lime (or similar saponifying agent) might favorably be added per barrel of drilling fluid when about three pounds per barrel of the product of the invention are used in the drilling fluid. A preferred minimum amount of lime is about one-half pound per pound (about of 0.23 kg to about 0.45 kg) the product of the invention. Additional lime (or similar saponifying agent) may be helpful or needed with larger quantities of product of the invention for optimum results, although satisfactory results might also be obtained with less.
Care is recommended when using the product of this invention to avoid over-treating. Excess emulsifiers (i.e., more than needed to effect emulsification) in drilling fluids can contribute to high fluid viscosity at cold temperatures (i.e., temperatures less than about 45 degrees Fahrenheit). For deepwater operations (i.e., use of drilling fluids at depths of water greater than about 500 feet (152m) and at temperatures less than about 45 degrees Fahrenheit (about 7.2 °C)), a wetting agent is used as Component A to help maintain low riser viscosities as drill solids are incorporated in or become carried by the drilling fluid.
The method of the invention comprises adding the product of the invention to an oil or, synthetic based drilling fluid or employing a drilling fluid comprising the product of the invention in drilling a borehole in a subterranean formation. In another embodiment, the method of the invention comprises adding the product of the invention to an oil or synthetic based drilling fluid to facilitate emulsification of the drilling fluid or the formation of invert emulsions.
Experiments were conducted that demonstrate or exemplify the invention. Several formulations of synthetic or oil-based drilling fluids were prepared, typical of those used in the field, and all of which comprised invert emulsions. Specifically, samples of drilling fluids were prepared comprising a synthetic or diesel oil base, to which additives were added, including the product of the invention or a known emulsifier for comparison, as indicated in Tables 1-13 below. The different samples were subjected to different conditions, such as high temperatures or hot rolling, or further additives or contaminants, for example, simulated drill solids or salt water, for comparison of performance and properties. The results of tests tabulated in Tables 1-4 are graphed in Figures 1 and 2.
As used in the tables, the following compounds or products have the meanings indicated below:
SF BASE™ is a synthetic oil base for drilling fluids typically used in drilling mud systems such as
PETROFREE®SF, available from Halliburton Energy Services, Inc. in Houston Texas;
LE BASE™ is a synthetic oil base for drilling fluids typically used in drilling mud systems such as PETROFREE® LE;
GELTONE® II, is an organoclay for improving viscosity characteristics;
SUSPENTONE® is an organoclay for improving the ability of a drilling fluid to suspend drill cuttings;
INVERMUL® is an emulsifier;
EZ MUL® is an emulsifier with a carboxylic acid terminated polyamide;
LE SUPERMUL® is an emulsifier with a carboxylic acid terminated polyamide;
LE MUL® is an emulsifier;
DRILTREAT™ is a wetting agent;
DEEP-TREAT™ is a wetting agent;
BAROID® is barite, a weighting agent;
DURATONE® HT is a filtration control agent;
BDF-257™ is Component B;
BDF-258™ is a product having Component B and a carboxylic acid terminated polyamide;
BD QUAT 2HT™ is dimethyl dihydrogenated tallow quaternary amine and chloride salt; and Rev Dust is material used to simulate drill solids.
All trademarks are the property of Halliburton Energy Services, Inc. and the products are available from Halliburton Energy Services, Inc. in Houston, Texas.

**TABLE 1**

| ****PETROFREE® SF** | | | | | | | |
|---|---|---|---|---|---|---|---|
| **14 Ib/gal [1680kg/m³]; 75/25 OWR with 250,000 ppm WPS** | | | | | | | |
| **Sample Mark** | **A (7.33 lb/bbl [20.9 kg/m³] Active emulsifier content)** | | | | | | |
| SF BASE, bbl [m³] | | | 0.516 [0.082] | | | | |
| Freshwater, bbl [m³] | | | 0.181 [0.02878] | | | | |
| GELTONE® II, Ib [kg] | | | 3 [1.4] | | | | |
| SUSPENTONE™, lb[kg] | | | 1 [0.45] | | | | |
| LE™MUL, lb[kg] | | | 4 [1.8] | | | | |
| LE™ SUPERMUL, lb[kg] | | | 6 [2.7] | | | | |
| Lime, lb [kg] | | | 5 [2.3] | | | | |
| DURATONE® HT, lb [kg] | | | 7 [3.2] | | | | |
| BAROID®, lb[kg] | | | 330 [150] | | | | |
| Calcium chloride, lb [kg] | | | 21.9 [9.934] | | | | |
| DEEP-TREAT™, lb [kg] | | | 3 [1.4] | | | | |

| Mixed 15 minutes at 7000 rpm on a Silverson LART before testing; mixed 10 minutes alter rolling | | | | | | | |
|---|---|---|---|---|---|---|---|
| Rev Dust, lb [kg] | | | | 45 [20.41] | | — | |
| 15% NaCl Brine Added, %vol | — | | | — | | 33 | |
| Hot rolled@250°F [121°C], hr | — | 16 | | 16 | | 16 | |

| ***Temperature, °F [°C]*** | ***120 [48.9]*** | ***40[4.44]*** | ***120 [48.9]*** | ***40 [4.44]*** | ***120 [48.9]*** | ***40 [4.44]*** | ***120 [48.9]*** |
|---|---|---|---|---|---|---|---|
| Plastic viscosity, cP [Pa·s] | 23[0.023] | 80 [0.08] | 24 [0.024] | 112 [0.112] | 37 [0.037] | 108 [0.108] | 38 [0.038] |
| Yield point, lb/100 ft²[kg/m²] | 15 [0.632] | 18 [0.758] | 8 [0.336] | 19 [0.8] | 8 [0.336] | 26[1.09] | 11 [0.463] |
| 10 Sec gel, lb/100 ft² [kg/m²] | 8 [0.337] | 7 [0.295] | 6 [0.253] | 10 [0.421] | 7 [0.295] | 9 [0.379] | 6 [0.253] |
| 10 Min gel, lb/100 ft² [kg/m²] | 9 [0.379] | 11 [0.463] | 8 [0.337] | 18 [0.758] | 10 [0.421] | 12[0.505] | 10 [0.421] |
| Electrical stability, v | 690 | 235 | | 488 | | 77 | |
| HTHP filtrate @250°F [121°C], ml | 2.4 | 2.4 | | 10.4 | | 7.6 (0.5 water) | |

| Fann 35 dial readings | | | | | | | |
|---|---|---|---|---|---|---|---|
| 600 rpm | 61 | 178 | 56 | 243 | 82 | 242 | 87 |
| 300 rpm | 38 | 98 | 32 | 131 | 45 | 134 | 49 |
| 200 rpm | 29 | 69 | 24 | 91 | 33 | 94 | 36 |
| 100 rpm | 20 | 38 | 15 | 51 | 20 | 53 | 23 |
| 6 rpm | 7 | 7 | 5 | 10 | 5 | 10 | 7 |
| 3rpm | 6 | 6 | 4 | 9 | 4 | 8 | 6 |

| | | | | | | | |
|---|---|---|---|---|---|---|---|
| Note: Contaminated samples were made up with mud already rolled 16hr @250°F [121°C]. | | | | | | | |

**TABLE 2**

| ****PETROFREE® SF** | | | | | | | | | |
|---|---|---|---|---|---|---|---|---|---|
| **14 lb/gal [1680kg/m³]; 75/25 OWR with 250,000 ppm WPS** | | | | | | | | | |
| **Sample Mark** | **H3** | | | | | | | | |
| SF BASE, bbl [m³] | 0.516 [0.082] | | | | | | | | |
| Freshwater, bbl [m³] | 0.181 [0.02878] | | | | | | | | |
| GELTONE® II, lb [kg] | 3 [1.4] | | | | | | | | |
| SUSPENTONE™, lb [kg] | 1 [0.45] | | | | | | | | |
| BDF-258, lb [kg] | 3[1.4] | | | | | | | | |
| Lime, lb [kg] | 8 [3.6] | | | | | | | | |
| DURATONE® HT, lb[kg] | 7 [3.2] | | | | | | | | |
| BAROID®, lb [kg] | 330 [150] | | | | | | | | |
| Calcium chloride, lb [kg] | 21.9 [9.934] | | | | | | | | |
| DEEP-TREAT™, lb[kg] | 3[1.4] | | | | | | | | |

| Mixed 15 minute at 7000 rpm on a Silverson L4RT before testing; mixed 10 minutes after rolling | | | | | | | | | |
|---|---|---|---|---|---|---|---|---|---|
| Rev Dust, lb [kg] | — | | | | | 45 [20.41] | | - | |
| 15%NaCl Brine Added, % vol | | | | | | — | | 33 | |
| Hot rolled @250°F [121°C], hr | — | — | | 16 | | 16 | | 16 | |

| ***Temperature, ° F*/*°C*/** | ***120[48.9]*** | ***40[4.44]*** | ***120 [48.9]*** | ***40[4.44]*** | ***[48.9]*** | ***40[4.44] 20*** | ***[48.9]*** | ***40[4.44]*** | ***120[48.9]*** |
|---|---|---|---|---|---|---|---|---|---|
| Plastic viscosity, cP [Pa·s] | 29[0.029] | 78 [0.078] | 27 [0.027] | 72 [0.072] | 26 [0.026] | N/A | 9 [0.049] | 113[0.113] | 43[0.043] |
| Yield point, lb/100 ft² [kg/m²] | 16 [0.674] | 33 [1.39] | 14 [0.589] | 24 [1.01] | 12[0.505] | N/A | 24 [1.01] | 43[1.81] | 20[0.842] |
| 10 Sec gel, lb/100 ft² [kg/m²] | 8 [0.337] | 15 [0.632] | 7[0.295] | 13 [0.547] | 7[0.295] | 27 [1.14] | 16 [0.674] | 19 [0.8] | 13[0.547] |
| 10 Min gel, lb/100 f²[kg/m²] | 10 [0.421] | 17 [0.716] | 9 [0.379] | 15 [0.632] | 9 [0.379] | 57 [2.4] 36 | [1.52] | 20[0.842] | 13[0.547] |
| Electrical stability, v | 638 | 669 | | 630 | | 884 | | 393 | |
| HTHP filtrate @250°F [121°C], ml | | 2.0 | | 1.6 | | 5.2 | | 2.4 | |

| Fann 35 dial readings | | | | | | | | | |
|---|---|---|---|---|---|---|---|---|---|
| 600 rpm | 74 | 189 | 68 | 168 | 64 | O/S | 122 | | 106 |
| 300 rpm | 45 | 111 | 41 | 96 | 38 | 186 | 73 | 156 | 63 |
| 200 sill | 35 | 82 | 32 | 72 | 30 | 139 | 56 | 116 | 48 |
| 100 rpm | 24 | 53 | 22 | 45 | 20 | 88 | 38 | 72 | 32 |
| 6 rpm | 9 | 17 | 8 | 14 | 8 | 29 | 15 | 21 | 12 |
| 3 rpm | 8 | 15 | 7 | 12 | 7 | 26 | 14 | 19 | 11 |

| | | | | | | | | | |
|---|---|---|---|---|---|---|---|---|---|
| Note: O/S indicates an off-scale reading, or >300. Contaminated samples were made up with mud already rolled 16hr @250°F [121°C] | | | | | | | | | |

**TABLE 3**

| ****PETROFREE® LE** | | | | | | | | | |
|---|---|---|---|---|---|---|---|---|---|
| **14 lb/gal [1680kg/m³]; 75/25 OWR with 250,000 ppm WPS** | | | | | | | | | |
| ***Sample Mark*** | **C** | | | | | | | | |
| LE BASE, bbl [m³] | 0.5094 [0.081] | | | | | | | | |
| Freshwater, bbl [m³] | 0.1793[0.0285] | | | | | | | | |
| GELTONE® II lb [kg] | 3.5 [1.59] | | | | | | | | |
| SUSPENTONET™, lb [kg] | 2 [0.907] | | | | | | | | |
| LE™ MUL, lb [kg] | 7 [3.18] | | | | | | | | |
| LE™ SUPERMUL, lb [kg] | 4 [1.81] | | | | | | | | |
| Lime, lb [kg] | 7 [3.18] | | | | | | | | |
| DURATONE® HT, lb [kg] | 6 [2.72] | | | | | | | | |
| Calcium chloride, lb [kg] | 21.8 [9.89] | | | | | | | | |
| BAROID®, lb [kg] | 332.3 [150.73] | | | | | | | | |
| DEEP-TREAT™, lb [kg] | 3.5 [1.59] | | | | | | | | |

| Mixed 15 minutes at 7000 rpm on a Silverson L4RT before testing; mixed 10 minutes after rolling | | | | | | | | | |
|---|---|---|---|---|---|---|---|---|---|
| Rev Dust, 1b [kg] | — | | | | | 45 [20.41] | | | — |
| 15%NaCl BrineAdded, % vol | | | | | | — | | | 33 |
| Hot rolled @250°F [121°C], hr | — | — | | 16 | | 16 | | | 16 |

| ***Temperature, °F[°C]*** | ***120[48.9]*** | ***40 [4.44]*** | ***120[48.9]*** | ***40[4.44]*** | ***120[48.9]*** | ***40[4.44]*** | ***120[489.9]*** | ***40[4.44]*** | ***120 [48.9]*** |
|---|---|---|---|---|---|---|---|---|---|
| Plastic viscosity, cP [Pa·s] | 23 [0.023] | 94[0.094] | 22[0.022] | 77[0.077] | 23[0.023] | 82[0.082] | 32[0.032] | 87[0.087] | 35[0.035] |
| Yield point, lb/100 ft² [kg/m²] | 12 [0.505] | 51 [2.14] | 9[0.379] | 18 [0.758] | 6 [0.253] | 12 [0.505] | 5[0.211] | 14 [0.589] | 4[0.168] |
| 10 Sec gel, lb/100 ft²[kg/m²] | 6[0.253] | 17[0.716] | 6[0.253] | 9[0.379] | 5[0.211] | 8 [0.337] | 5[0.211] | 7 [0.295] | 5[0.211] |
| 10 Min gel, lb/100 ft²[kg/m²] | 9[0.379] | 21 [0.884] | 8 [0.337] | 15 [0.632] | 7[0.295] | 15 [0.632] | 8[0.337] | 10 [0.421] | 6[0.253] |
| Electrical stability, v | 737 | 676 | | 474 | | 545 | | 230 | |
| HTHP filtrate @250°F [121 °C], ml | | 4.4 | | 2.0 | | 10.0 | | 12.0-1.1 emul. | |

| Fann 35 dial readings | | | | | | | | | |
|---|---|---|---|---|---|---|---|---|---|
| 600 rpm | 58 | 239 | 53 | 172 | 52 | 176 | 69 | 188 | 74 |
| 300 rpm | 35 | 145 | 31 | 95 | 29 | 94 | 37 | 101 | 39 |
| 200 rpm | 26 | 108 | 24 | 67 | 22 | 66 | 28 | 70 | 29 |
| 100 rpm | 17 | 66 | 16 | 38 | 13 | 37 | 17 | 38 | 17 |
| 6 rpm | 6 | 19 | 5 | 9 | 4 | 8 | 4 | 7 | 5 |
| 3rpm | 5 | 17 | 4 | 8 | 3 | 7 | 3 | 6 | 4 |

| | | | | | | | | | |
|---|---|---|---|---|---|---|---|---|---|
| Note: O/S indicates an off-scale reading, or >300. Contaminated samples were made up with mud already hot rolled 16hr@250°C [121°C] | | | | | | | | | |

**TABLE 4**

| ****PETROFREE® LE** | | | | | | | | | |
|---|---|---|---|---|---|---|---|---|---|
| **14 lb/gal [1680kg/m³]; 75/25 OWRwith 250,000 ppm WPS** | | | | | | | | | |
| **Sample Mark** | **B2** | | | | | | | | |
| LE BASE, bbl [m³] | 0.5163 [0.082085] | | | | | | | | |
| Freshwater, bbl [m³] | 0.1796 [0.028554] | | | | | | | | |
| GELTONE® II, lb [kg] | 3 [1.36] | | | | | | | | |
| SUSPENTONE™, lb [kg] | 2 [0.907] | | | | | | | | |
| BDF-258, lb [kg] | 3 [1.36] | | | | | | | | |
| Lime, lb [kg] | 7 [3.175] | | | | | | | | |
| DURATONE® HT, lb [kg] | 6 [2.722] | | | | | | | | |
| Calcium chloride, lb [kg] | 21.8 [9.888] | | | | | | | | |
| BAROID®, lb [kg] | 333.2 [151.1] | | | | | | | | |
| DEEP-TREAT, lb [kg] | 3.3 [1.497] | | | | | | | | |

| Mixed 15 minutes at 7000 rpm on a Silverson L4RT before testing; mixed 10 minutes after rolling | | | | | | | | | |
|---|---|---|---|---|---|---|---|---|---|
| Rev Dust, lb [kg] | — | | | | | 45 [20.41] | | — | |
| 15%NaCl Brine Added, % vol | | | | | | — | | 33 | |
| Hot rolled @250°F [121°C], hr | — | — | | 16 | | 16 | | 16 | |

| ***Temperature, °F [°C]*** | ***120[489]*** | ***40 [4.44]*** | ***120[48.9]*** | ***40[4.44]*** | ***120[48.9]*** | ***40[4.44]*** | ***120[48.9]*** | ***40[4.44]*** | ***120[48.9]*** |
|---|---|---|---|---|---|---|---|---|---|
| Plastic viscosity, cP [Pa·s] | 26[0.026] | 72 [0.072] | 23 [0.023] | 64 [0.064] | 23 [0.023] | 98 [0.098]34 | [0.034] | 96[0.096] | 36 [0.036] |
| Yield point, lb/100 ft²[kg/m²] | 12 [0.505] | [1.22] | 9 [0.379] | 16 [0.674] | 7 [0.295] | 26 [1.09] | 6 [0.253] | 32[1.35] | 11 [0.463] |
| 10 Sec gel, lb/100 | 7 [0.295] | 14 [0.589] | 6 [0.253] | 12 [0.505] | 6 [0.252] | 13 [0.547] | 6 [0.2531 | 16[0.674] | 10 [0.421] |
| 10 Min gel, lb/100 ft²[kg/m²] | 9 [0.379] | 18 [0.758] | 8 [0.337] | 16 [0.674] | 9 [0.379] | 28 [0.179] | 8 [0.337] | 21 [0.884] | 9 [0.379] |
| Electrical stability, v | 554 | 615 | | 568 | | 574 | | 269 | |
| HTHP filtrate @250°F[21°C], ml | | 2.2 | | 2.2 | | 3.0 | | 1.8 | |

| Fann 35 dial readings | | | | | | | | | |
|---|---|---|---|---|---|---|---|---|---|
| 600 rpm | 64 | 173 | 55 | 144 | 53 | 222 | 74 | 224 | 83 |
| 300 rpm | 38 | 101 | 32 | 80 | 30 | 124 | 40 | 128 | 47 |
| 200 rpm | 29 | 75 | 25 | 58 | 23 | 89 | 29 | 94 | 36 |
| 100 rpm | 20 | 47 | 17 | 35 | 15 | 52 | 18 | 58 | 23 |
| 6rpm | 7 | 15 | 6 | 10 | 6 | 13 | 4 | 16 | 8 |
| 3 rpm | 6 | 14 | 5 | 9 | 5 | 11 | 3 | 14 | 7 |

| | | | | | | | | | |
|---|---|---|---|---|---|---|---|---|---|
| Note: O/S indicates an off-scale reading, or >300. Contaminated samples were made up with mud already hot rolled 16 hr @250°F [121°C] | | | | | | | | | |

**TABLE 5**

| ****PETROFREE® SF** | | | | | | | | | |
|---|---|---|---|---|---|---|---|---|---|
| **14 lb/gal 1680kg/m³]; 75/25 OWR with 250,000 ppm WPS** | | | | | | | | | |
| **Sample Mark** | **H2** | | | | | | | | |
| SF BASE, bbl [m³] | 0.516 [0.082] | | | | | | | | |
| Freshwater, bbl [m³] | 0.181 [0.02878] | | | | | | | | |
| GELTONE® II, lb [kg] | 3 [1.36] | | | | | | | | |
| SUSPENTONE™, lb [kg] | 1 [0.4536] | | | | | | | | |
| BDF-258, lb [kg] | 3 [1.36] | | | | | | | | |
| Lime, lb [kg] | 8 [3.629] | | | | | | | | |
| DURATONE® HT, lb [kg] | 7 [3.175] | | | | | | | | |
| BAROID®, lb [kg] | 330 [149.7] | | | | | | | | |
| Calcium chloride, lb [kg] | 21.9 [9.934] | | | | | | | | |
| DEEP-TREAT™, lb [kg] | 3 [1.36] | | | | | | | | |
| DRILTREAT®, lb [kg] | 1 [0.4536] | | | | | | | | |

| Mixed 15 minutes at 7000 rpm on a Silverson L4RT before testing; mixed 10 minutes after rolling | | | | | | | | | |
|---|---|---|---|---|---|---|---|---|---|
| Rev Dust, lb [kg] | — | | | | | 45 [20.41] | | — | |
| 15% NaCl Brine Added, % vol | | | | | | — | | 33 | |
| Hot rolled @250°F[121°C],hr | — - | — | | 16 | | 16 | | 16 | |

| ***Temperature °F[°C]*** | ***120 [48.9]*** | ***40 [4.44]*** | ***120[48.9]*** | ***40[4.44]*** | ***120[48.9]*** | ***40[4.44]*** | ***120[48.9]*** | ***40[4.44]*** | ***120[48.9]*** |
|---|---|---|---|---|---|---|---|---|---|
| Plastic viscosity, cP [Pa·s] | 28[0.028] | 82[0.082] | 25[0.025] | 86[0.086] | 25[0.025] | N/A | 46[0.046] | 116[0.116] | 41[0.041] |
| Yield point, lb/100 ft²[kg/m²] | 14 [0.589] | 36[1.516] | 16 [0.674] | 29 [1.22] | 14 [0.589] | N/A | 22[0.926] | 45[1.89] | 22[0.926] |
| 10 Sec gel, lb/100 ft² [kg/m²] | 7 [0.295] | 17 [0.716] | 7[0.295] | 14 [0.589] | 8 [0.337] | 28[1.179] | 18[0.758] | 19[0.8] | 12[0.505] |
| 10 Min gel, lb/100 ft²[kg/m²] | 10 [0.421] | 20 [0.842] | 9 [0.379] | 18[0.758] | 10[0.421] | 60 [2.53] | 31[1.305] | 21[0.884] | 12[0.505] |
| Electrical stability, v | 603 | 694 | | 684 | | 846 | | 409 | |
| HTHP filtrate @250°F [121°C], ml | | 1.2 | | 1.6 | | 4.0 | | 1.6 | |

| Fann 35 dial readings | | | | | | | | | |
|---|---|---|---|---|---|---|---|---|---|
| 600 rpm | 70 | 200 | 66 | 201 | 64 | O/S | 114 | 277 | 104 |
| 300 rpm | 42 | 118 | 41 | 115 | 39 | 201 | 68 | 161 | 63 |
| 200 rpm | 33 | 89 | 32 | 84 | 30 | 149 | 52 | 119 | 48 |
| 100 rpm | 22 | 57 | 22 | 51 | 21 | 93 | 34 | 74 | 33 |
| 6 rpm | 8 | 19 | 8 | 15 | 8 | 28 | 13 | 22 | 13 |
| 3 rpm | 7 | 17 | 7 | 14 | 7 | 24 | 12 | 19 | 12 |

| | | | | | | | | | |
|---|---|---|---|---|---|---|---|---|---|
| Note: O/S indicates an off-scale reading, or >300. Contaminated samples were made up with mud already rolled 16 hr @250°F [121°C] | | | | | | | | | |

**TABLE 6**

| ****PETROFREE® SF** | | | | | | | | | |
|---|---|---|---|---|---|---|---|---|---|
| **14 lb/gal [1680kg/m³]; 75/25 OWR with 250,000 ppm WPS NO DURATONE® HT** | | | | | | | | | |
| **Sample Mark** | **O** | | | | | | | | |
| SF BASE, lb [kg] | 0.516 [0.082] | | | | | | | | |
| Freshwater, bbl [m³] | 0.181 [0.02878] | | | | | | | | |
| GELTONE® II, lb [kg] | 4 [1.814] | | | | | | | | |
| SUSPENTONE™, lb[kg] | 1 [0.4536] | | | | | | | | |
| BDF-258 lb[kg] | 3 [1.36] | | | | | | | | |
| Lime, lb [kg] | 9[4.082] | | | | | | | | |
| Calcium chloride, lb [kg] | 21.9 [9.934] | | | | | | | | |
| BAROID®, lb [kg] | 330 [149.7] | | | | | | | | |
| DRILTREAT®, lb [kg] | 1 [0.4536] | | | | | | | | |
| DEEP-TREAT™, lb [kg] | 3 [1.36] | | | | | | | | |

| Mixed 15 minutes at 7000 rpm on a Silverson L4RT before testing; mixed 10 minutes after rolling | | | | | | | | | |
|---|---|---|---|---|---|---|---|---|---|
| Hot rolled @250°F[121°C],hr | — | — | | 16 | | 16 | | 16 | |
| Rev Dust, lb [kg] | - | - | | — | | 45 [20.41] | | — | |
| 15% NaCl brine, % vol | | | | — | | — | | 33 | |

| ***Temperature, °F[°C]*** | ***120[48.9]*** | ***40[4.44]*** | ***120[48.9]*** | ***40[4.44]*** | ***120[48.9]*** | ***40[4.44]*** | ***120[48.9]*** | ***40[4.44]*** | ***120[48.9]*** |
|---|---|---|---|---|---|---|---|---|---|
| Plastic viscosity, cP [Pa·s] | 28[0.028] | 88[0.088] | 33[0.033] | 85[0.085] | 29[0.029] | N/A | 50[0.05] | N/A | 69[0.069] |
| Yield point, lb/100 ft² [kg/m²] | 5[0.211] | 19[0.8] | 8[0.337] | 20 [0.842] | 8 [0.337] | N/A | 5[0.211] | N/A | 45 [1.89] |
| 10 Sec gel, lb/100 ft² [kg/m²] | 5 [0.211] | 10 [0.421] | 7 [0.295] | 9 [0.379] | 5[0.211] | 5[0.211] | 3 [0.126] . | 48 [2.02] | 25 [1.05] |
| 10 Min gel, lb/100 ft²[kg/m²] | 8[0.337] | 14 [0.589] | 9[0.379] | 13[0.547] | 7[0.295] | 14[0.589] | 10 [0.421] | > 60 [>2.53] | 62 [2.61] |
| Electrical stability @120°F [**48.9**°C], v | 471 | 519 | | 496/230 | | 218 | | 285 | |
| HTHP filtrate @250°F [121°C], ml | | 0.2 | | 1.6 | | 4.0 | | 3.4-0.4 H₂O | |

| Fann 35 dial readings | | | | | | | | | |
|---|---|---|---|---|---|---|---|---|---|
| 600 rpm | 61 | 195 | 74 | 190 | 66 | O/S | 105 | O/S | 183 |
| 300 rpm | 33 | 107 | 41 | 105 | 37 | 173 | 55 | O/S | 114 |
| 200 rpm | 25 | 75 | 31 | 75 | 27 | 123 | 39 | 256 | 87 |
| 100 rpm | 16 | 43 | 20 | 44 | 17 | 68 | 21 | 163 | 57 |
| 6 rpm | 5 | 10 | 7 | 10 | 5 | 7 | 3 | 45 | 26 |
| 3 rpm | 4 | 8 | 6 | 8 | 4 | 5 | 2 | 40 | 24 |

| | | | | | | | | | |
|---|---|---|---|---|---|---|---|---|---|
| Note:O/S indicates an off-scale reading, or >300. Contaminated samples were made up with mud already rolled 16 hr @250°F[121°C] | | | | | | | | | |

**TABLE 7**

| ****INVERMUL®** | | | | | | | | |
|---|---|---|---|---|---|---|---|---|
| **14 lb/gal [1680kg/m³]; 250,000 WPS** | | | | | | | | |
| **Sample Mark** | **1** | **2** | | **3** | **4** | | **5** | |
| Diesel, bbl [m³] | 0.5395 [0.08577] | 0.5234 [0.08321] | 0.5679 [0.09029] | | 0.5743 [0.09131] | | 0.5608 [0.08916] | |
| Fresh water, bbl[m³] | 0.1814 [0.02884] | 0.1815 [0.02886] | 0.1449 [0.02304] | | 0.1453 [0.0231] | | 0.1454 [0.02312] | |

| ***Oil-to-Water Ratio*** | ***75*/*25*** | ***75*/*25*** | ***80*/*20*** | | ***80*/*20*** | | ***80*/*20*** | |
|---|---|---|---|---|---|---|---|---|
| GELTONE® II, lb [kg] | 2 [0.907] | 2 [0.907] | 2[0.907] | | 2 [0.907] | | 2 [0.907] | |
| SUSPENTONE™, lb [kg] | 1[0.454] | 1[0.454] | | — | — | | — | |
| BDF-258, lb [kg] | 3.5 [1.59] | - | 6[2.72] | | 3 [1.36] | | — | |
| INVERMUL® NT, lb [kg] | — | 3[1.36] | | — | — | | 3[1.36] | |
| Lime, lb [kg] | 8[3.63] | 8[3.63] | 12 [5.44] | | 8[3.63] | | 8[3.63] | |
| DURATONE® HT, lb [kg] | 6[2.72] | 6[2.72] | 6[2.72] | | 6[2.72] | | 6[2.72] | |
| EZMUL® NT, lb[kg] | — | 6[2.72] | | — | — | | 6[2.72] | |
| Calcium chloride, lb [kg] | 22.0[9.98] | 22.1[10] | 17.6 [7.98] | | 17.7 [8.03] | | 17.7 [8.03] | |
| BAROID®, lb [kg] | 302 [137] | 301 [137] | 307 [139] | | 310[141] | | 309 [140] | |
| Rev Dust, lb [kg] | 20 [9.07] | 20[9.07] | 20[9.07] | | 20[9.07] | | 20[9.07] | |
| DRILTREAT®, lb [kg] | — | — | | — | 1.5[0.68] | | — | |
| | | | | | | | | |
| Hot rolled @300°F [149°C], hr | — | — | — | 16 | — | 16 | — | 16 |
| Plastic viscosity@ 150°F[65.6 °C], cP [Pa·s] | 25 [0.025] | 26 [0.026] | 21 [0.0 21] | 23 [0.023] | 22 [0.022] | 19 [0.019] | 20 [0.020] | 22 [0.022] |
| Yield point, lb/100 ft² [kg/m²] | 31 [1.31] | 53 [2.23] | 17 [0.715 ] | 11[0.463] | 13 [0.547] | 9 [0.379] | 30 [1.26] | 8 [0.337] |
| 10 Sec gel, lb/100 ft² [kg/m²] | 26 [1.09] | 32 [1.35] | 12 [0.505 | 14 [0.589] | 8[0.337 ] | 8[0.337] | 16 [0.674] | 8[0.337] |
| 10 Min gel, lb/100 ft² [kg/m²] | 34 [1.43] | 34[1.43] | 23 [0.968 | 29 [1.22] | 15 [0.632] | 16 [0.674] | 16 [0.674] | 9 [0.379] |
| Electrical stability, v | 593 | 1140 | 923 | 1302 | 697 | 783 | 1404 | 766 |
| HTHP filtrate @300°F [149°C], ml | 11.6* | 3.8 | 6.2 | 16.4 | 5.6 | 10.0 | 5.4 | 7.6 |

| Fann 35 dial readings | | | | | | | | |
|---|---|---|---|---|---|---|---|---|
| 600 rpm | 81 | 105 | 59 | 57 | 57 | 47 | 70 | 52 |
| 300 rpm | 56 | 79 | 3 | 34 | 35 | 28 | 50 | 30 |
| 200 rpm | 46 | 69 | 3 | 26 | 28 | 21 | 42 | 23 |
| 100 rpm | 36 | 56 | 2 | 17 | 19 | 14 | 32 | 16 |
| 6rpm | 21 | 33 | 1 | 8 | 8 | 7 | 17 | 7 |
| 3 rpm | 20 | 32 | 9 | 7 | 7 | 6 | 16 | 6 |

| | | | | | | | | |
|---|---|---|---|---|---|---|---|---|
| * Trace of water/emulsion was seen in the filtrate. | | | | | | | | |

**TABLE 8**

| ****INVERMUL®** | | | | |
|---|---|---|---|---|
| **14 lb/gal [1680kg/m³]; 80/20 OWR with 250,000 WPS** | | | | |
| **Sample Mark** | **10** | | **11** | |
| Diesel, bbl [m³] | 0.577 [0.09174] | | 0.577 [0.09174] | |
| Fresh water, bbl [m³] | 0.145 [0.02305] | | 0.145 [0.02305] | |
| GELTONE® II, lb [kg] | 6 [2.72] | | 6[2.72] | |
| BDF-258, lb [kg] | 3[1.36] | | 3[1.36] | |
| Lime, lb [kg] | 8 [3.63] | | 8 [3.63] | |
| Calcium chloride, lb [kg] | 17.6 [7.98] | | 17.6 [7.98] | |
| DEEP-TREAT™, lb [kg] | 1.5 [0.68] | | 1 [0.454] | |
| BAROID®, lb [kg] | 312 [142] | | 312 [142] | |
| Rev Dust, lb [kg] | 20 [9.07] | | 20[9.07] | |
| DRILTREAT®, lb [kg] | — | | 1 [0.454] | |
| | | | | |
| Hot rolled @150°F [65.6 °C], hr | 16 | — | 16 | - |
| Hot rolled @250°F [121°C], hr | — | 16 | — | 16 |
| Plastic viscosity @150°F[65.6 °C],, cP [Pa·s] | 23 [0.023] | 24 [0.024] | 23[0.023] | 24[0.024] |
| Yield point, lb/100 ft²[kg/m²] | 28[1.18] | 10 [0.421] | 25 [1.05] | 12 [0.505] |
| 10 Sec gel, lb/100 ft² [kg/m²] | 17 [0.716] | 10[0.421] | 18[0.758] | 11 [0.463] |
| 10 Min gel, lb/100 ft² [kg/m²] | 22[0.926] | 16 [0.674] | 20 [0.842] | 20 [0.842] |
| Electrical stability, v | 686 | 783 | 561 | 723 |
| HTHP filtrate @250°F [121°C], ml | 5.6 | 6.8 | 6.6 | 9.4 |
| HTHP filt. cake thickness, 1/32" [cm] | 4 [0.3] | 3 [0.2] | 5 [0.4] | 5 [0.4] |

| Fann 35 dial readings | | | | |
|---|---|---|---|---|
| 600 rpm | 74 | 58 | 71 | 60 |
| 300 rpm | 51 | 34 | 48 | 36 |
| 200 rpm | 42 | 26 | 39 | 28 |
| 100 rpm | 32 | 17 | 30 | 19 |
| 6 rpm | 17 | 7 | 17 | 8 |
| 3 rpm | 16 | 6 | 17 | 8 |

| | | | | |
|---|---|---|---|---|
| *Note: 0.4* /*b*/*bb*/ *[0.1 kglm³] DEEP-TREAT*™ *was sufficient to wet in the barite and Rev Dust in mud 11. Additional product was added after the Rev Dust to total 1 lb*/*bbl. [3 kg*/*m³]* | | | | |

**TABLE 9**

| ****PETROFREE® SF** | | | | | | | | | |
|---|---|---|---|---|---|---|---|---|---|
| **14 lb/gal [1680kg/m³]; 75/25 OWR with 250,000 ppm WPS NO DURATONE® HT** | | | | | | | | | |
| **Sample Mark** | **I** | | | | | | | | |
| SF BASE, bbl [m³] | 0.516 [0.08204] | | | | | | | | |
| Freshwater, bbl [m³] | 0.181 [0.02878] | | | | | | | | |
| GELTONE® II, lb [kg] | 4[1.81] | | | | | | | | |
| SUSPENTONE™, lb [kg] | 1[0.454] | | | | | | | | |
| BDF-258, lb [kg] | 3.5 [1.59] | | | | | | | | |
| Lime, lb [kg] | 9 [4.08] | | | | | | | | |
| DURATONE® HT, lb [kg] | - | | | | | | | | |
| Calcium chloride, lb [kg] | 21.9 [9.93] | | | | | | | | |
| DEEP-TREAT™, lb [kg] | 3 [1.36] | | | | | | | | |
| BAROID®, lb [kg] | 330 [150] | | | | | | | | |

| Mixed 15 minutes at 7000 rpm on a Silverson L4RT before testing; mixed 10 minutes after rolling | | | | | | | | | |
|---|---|---|---|---|---|---|---|---|---|
| Hot rolled @250°F [121°C], hr | — | — | | 16 | | 16 | | 16 | |
| Rev Dust, lb [kg] | — | | | | | 45 [20.41] | | — | |
| 15% NaCl Brine Added, % vol | | | | | | — | | 33 | |

| ***Temperature, °F[°C]*** | ***120[48.9]*** | ***40[4.44]*** | ***120[48.9]*** | ***40[4.44]*** | ***120[48.9]*** | ***40[4.44]*** | ***120[48.9]*** | ***58[14.4]*** | ***120[48.9]*** |
|---|---|---|---|---|---|---|---|---|---|
| Plastic viscosity, cP [Pa·s] | 29[0.029] | 85[0.085] | 32[0.032] | 76[0.07] | 31 [0.031] | N/A | 54[0.054] | N/A | 71[0.071] |
| Yield point, lb/100 ft² [kg/m²] | 9 [0.379] | 17[0.716] | 9[0.3791 | 15[0.6321 | 6 [0.253] | N/A | 7[0.295] | N/A | 53 [2.23] |
| 10 Sec gel, lb/100 ft²[kg/m²] | 7[0.295] | 10 [0.421] | 8 [0.337] | 9[0.379] | 7[0.295] | 6[0.253] | 4[0.168] | 55 [2.32] | 34 [1.43] |
| 10 Min gel, lb/100 ft²[kg/m²] | 8 [0.337] | 15[0.632] | 1110.463] | 10 [0.421] | 7[0.295] | 13 [0.547] | 8 [0.337] | - | 65 [2.74] |
| Electrical stability, v | 482 | 529 | | 241 | | 234 | | 293 | |
| HTHP filtrate @150°F [121°C], ml | | 1.6 | | 2.8* | | 6.0 | | 5.0 - 1.0H₂O | |

| Fann 35 dial readings | | | | | | | | | |
|---|---|---|---|---|---|---|---|---|---|
| 600 rpm | 67 | 187 | 73 | 167 | 68 | O/S | 115 | O/S | 195 |
| 300 rpm | 38 | 102 | 41 | 91 | 37 | 186 | 61 | 278 | 124 |
| 200 rpm | 29 | 73 | 31 | 65 | 28 | 130 | 43 | 220 | 97 |
| 100 rpm | 19 | 42 | 20 | 38 | 18 | 71 | 23 | 151 | 67 |
| 6 rpm | 6 | 10 | 7 | 9 | 6 | 8 | 3 | 53 | 29 |
| 3rpm | 5 | 8 | 6 | 7 | 5 | 5 | 2 | 50 | 28 |

| | | | | | | | | | |
|---|---|---|---|---|---|---|---|---|---|
| Note: O/S indicates an off-scale reading, or >300. Contaminated samples were made up with mud already rolled 16 hr @250°F [121°C] *Some small water droplets were observed in the filtrate | | | | | | | | | |

**TABLE 10**

| ****PETROFREE® SF** | | | | | | | | | |
|---|---|---|---|---|---|---|---|---|---|
| **14 lb/gal [1680kg/m³]; 75/25 OWR with 250,000 ppm WPS NO DURATONE® HT** | | | | | | | | | |
| **Sample Mark** | **N** | | | | | | | | |
| SF BASE, lb [kg] | 0.516 [0.08204] | | | | | | | | |
| Freshwater, bbl [m³] | 0.181 [0.02878] | | | | | | | | |
| GELTONE® II, lb[kg] | 4 [1.81] | | | | | | | | |
| SUSPENTONE™, lb [kg] | 1 [0.454] | | | | | | | | |
| BDF-258, lb [kg] | 3.5 [1.59] | | | | | | | | |
| Lime, lb [kg] | 9 [4.08] | | | | | | | | |
| Calcium chloride, lb [kg] | 21.9 [9.93] | | | | | | | | |
| DEEP-TREAT®, lb [kg] | 4 [1.81] | | | | | | | | |
| BAROID®, lb [kg] | 330 [150] | | | | | | | | |

| Mixed 15 minutes at 7000 rpm on a Silverson L4RT before testing; mixed 10 minutes after rolling | | | | | | | | | |
|---|---|---|---|---|---|---|---|---|---|
| Hot rolled @250°F [121°C],hrs | — | — | | 16 | | 16 | | 16 | |
| Rev Dust, lb [kg] | — | | | | | 45 [20.41] | | — | |
| 15% NaCl brine, % vol | | | | | | — | | 33 | |
| **DEEP-TREAT™, lb [kg]** | — | | | | | 2 | | 2 | |

| ***Temperature, °F[°C]*** | ***120[48.9]*** | ***40[4.44]*** | ***1120[48.9]*** | ***40[4.44]*** | ***120[48.9]*** | ***40[4.44]*** | ***120[48.9]*** | ***40[4.44]*** | ***120 [48.9]*** |
|---|---|---|---|---|---|---|---|---|---|
| Plastic viscosity, cP [Pa·s] | 35 [0.035] | 103 [0.103] | 38 [0.038] | 80 [0.08] | 31[0.031] | 124[0.124] | 4[0.044] | N/A | 53[0.053] |
| Yield point, lb/100 ft² [kg/m²] | 11 [0.463] | 18 [0.758] | 11 [0.463] | 16[0.674] | 6 [0.253] | 22[0.926] 5 | [0.211] | N/A | 10 [0.421] |
| 10 Sec gel, lb/100 ft.² [kg/m²] | 8 [0.337] | 10 [0.421] | 7 [0.295] 8 | [0.337] | 6[0.253] | 5 [0.211] | [5 [0.211] | 8[0.337] | 6 [0.253] |
| 10 Min gel, lb/100 ft²[kg/m²] | 14 [0.589] | 16 [0.674] | 11 [0.463] 9 | [0.379] | 7 [0.295] | 8 [0.337] 7 | [0.295] | 10 [0.421] | 7 [0.295] |
| Electrical stability @120°F[48.9°C], v | 503 | 527 | | 209 | | 275 | | 156 | |
| HTHP filtrate @250°F [121°C], ml | | 0.6 | | 1.2 | | 1.6 | | 1.0-tracemul | |

| Fann 35 dial readings | | | | | | | | | |
|---|---|---|---|---|---|---|---|---|---|
| 600 rpm | 81 | 224 | 87 | 176 | 168 | 270 | 93 | O/S | 116 |
| 300 rpm | 46 | 121 | 9 | 96 | 37 | 146 | 9 | 189 | 63 |
| 200 rpm | 35 | 85 | 37 | 68 | 9 | 101 | 35 | 134 | 44 |
| 100 rpm | 22 | 49 | 24 | 39 | 18 | 55 | 20 | 74 | 25 |
| 6rpm | 7 | 10 | 7 | 8 | | 6 | 4 | 10 | 5 |
| 3 rpm | 6 | 8 | 6 | 7 | 5 | 4 | 3 | 7 | 4 |

| | | | | | | | | | |
|---|---|---|---|---|---|---|---|---|---|
| Note: O/S indicates an -scale reading or >300. Contaminated samples were made up with mud already rolled 16 hr @250°F[ 121 °C] | | | | | | | | | |

**TABLE 11**

| ****PETROFREE® SF** | | | | | | | | | |
|---|---|---|---|---|---|---|---|---|---|
| **14 lb/gal [1680kg/m³]; 75/25 OWR with 250,000 ppm WPS** | | | | | | | | | |
| **Sample Mark** | **BB** | | | | | | | | |
| SF BASE, lb [kg] | 0.516 [0.08204] | | | | | | | | |
| Freshwater, bbl [m³] | 0.181 [0.02878] | | | | | | | | |
| GELTONE® II, lb [kg] | 4 [1.81] | | | | | | | | |
| SUSPENTONE^{™}, lb [kg] | 1 [0.454] | | | | | | | | |
| BDF-258, lb [kg] | 3.5 [1.59] | | | | | | | | |
| Lime, lb [kg] | 9 [4.08] | | | | | | | | |
| Calcium chloride, lb [kg] | 21.9 [9.93] | | | | | | | | |
| BD QUAT 2HT, lb [kg] | 1 [0.454] | | | | | | | | |
| BAROID®, lb [kg] | 330 [150] | | | | | | | | |
| DEEP-TREAT™, lb [kg] | 3 [1.36] | | | | | | | | |

| Mixed 15 minutes at 7000 rpm on a Silverson L4RT before testing; mixed 10 minutes after rolling | | | | | | | | | |
|---|---|---|---|---|---|---|---|---|---|
| Hot rolled @ 250°F [121°C], hr | — | — | | 16 | | 16 | | 16 | |
| Rev Dust, lb [kg] | | | | | | 45 [20.41] | | — | |
| 15% NaCl Brine, % vol | | | | | | — | | 25 | |

| ***Temperature, °F[°C]*** | ***120[489]*** | ***40[4.44]*** | ***120[48.9]*** | ***40[4.44]*** | ***120[48.9]*** | ***40[4.44]*** | ***120[48.9]*** | ***40[4.44]*** | ***120[48.9]*** |
|---|---|---|---|---|---|---|---|---|---|
| Plastic viscosity, cP [Pa·s] | 29[0.029] | 76 [0.076] | 30[0.03] | 75[0.075] | 28[0.028] | 119[0.119] | 40 [0.04] | 119[0.119] | 43 [0.043] |
| Yield point, lb/100 ft² [kg/m²] | 15 [0.632] | 32 [1.35] | 17 [0.716] | 124[1.01] | 10 [0.421] | 16 [0.674] | 6 [0.253] | 35 [1.47] | 14[0.589*]* |
| 10 Sec gel, lb/100 ft² [kg/m²] | 8 [0.337] | 14 [0.589] | 8 [0.337] | 11 [0.463] | 7 [0.295] | 7[0.295] | 5 [0.211] | 15 [0.632] | 8 [0.337] |
| 10 Min gel, lb/100 ft²[kg/m²] | 13 [0.547] | 17 [0.716] | 9 [0.379] | 12 [0.505] | 8 [0.337] | 11 [0.463] | 10 [0.421] | 15 [0.632] | 9 [0.379] |
| Electrical stability @ 120 °F [48.9°C], v | 633 | *486 average | | 333 | | 576 | | 223 | |
| HTHP filtrate @250°F [121 °C], ml | | 2.2 | | 5.4 | | 4.0 | | 3.0-0.2 emul. | |

| Fann 35 dial readings | | | | | | | | | |
|---|---|---|---|---|---|---|---|---|---|
| 600 rpm | 73 | 184 | 77 | 174 | 66 | 254 | 86 | 273 | 100 |
| 300 rpm | 44 | 108 | 47 | 99 | 38 | 135 | 46 | 154 | 57 |
| 200 rpm | 34 | 81 | 36 | 73 | 30 | 93 | 33 | 111 | 42 |
| 100 rpm | 23 | 52 | 24 | 45 | 19 | 50 | 19 | 65 | 26 |
| 6 rpm | 8 | 16 | 8 | 13 | 7 | 7 | 4 | 15 | 8 |
| 3 rpm | 7 | 14 | 7 | 11 | 6 | 5 | 3 | 13 | 7 |

| | | | | | | | | | |
|---|---|---|---|---|---|---|---|---|---|
| Note: Contaminated samples were made up with mud already hot rolled 16 hr.@,250°F [121 °C] ***ES readings ranged from 347 to 656 volts.** | | | | | | | | | |

**TABLE 12**

| ***BDF-257 and BDF-258 summary*** | | | | | | | | | | | | | | | | |
|---|---|---|---|---|---|---|---|---|---|---|---|---|---|---|---|---|
| ***PETROFREE SF:* 14lb/gal[1680kg/m³]; 75/25 *OWR with 250,000ppm WPS*** | | | | | | | | | | | | | | | | |
| **Sample Mark** | ****A** | | | ****B** | | | ****C** | | | **D** | | | | ****E** | | |
| SF BASE bbl [m³] | 0.516 [0.08204] | | | 0.516 [0.08204] | | | 0.516 [0.08204] | | | 0.516 [0.08204] | | | | 0.516 [0.08204] | | |
| Freshwater, bbl [m³] | 0.181 [0.02878] | | | 0.181 [0.02878] | | | 0.181 [0.02878] | | | 0.181 [0.02878] | | | | 0.181 [0.02878] | | |
| GELTONE II, lb [kg] | 3 [1.36] | | | 3 [1.36] | | | 3 [1.36] | | | 3 [1.36] | | | | 3 [1.36] | | |
| SUSPENTON E, lb [kg] | 1 [0.454] | | | 1 [0.454] | | | 1 [0.454] | | | 1 [0.454] | | | | 1 [0.454] | | |
| LE MUL, lb [kg] | 4[1.81] | | | - | | | - | | | - | | | | - | | |
| BDF-257, lb [kg] | - | | | 3.5 [1.59] | | | 4.9 [2.22] | | | 7 [3.18] | | | | - | | |
| BDF-258, lb [kg] | - | | | - | | | - | | | - | | | | 3 [1.36] | | |
| LE SUPERMUL, lb [kg] | 6 [2.72] | | | 4.8 [2.18] | | | 2.9 [1.32] | | | - | | | | - | | |
| Lime, lb [kg] | 5 [2.27] | | | 5 [2.27] | | | 5 [2.27] | | | 18 [8.16] | | | | 8 [3.63] | | |
| DURATONE HT, lb [kg] | 7 [3.18] | | | 7 [3.18] | | | 7 [3.18] | | | . 7 [3.18] | | | | 7 [3.18] | | |
| BAROID®, lb | 330 [150] | | | 330 [150] | | | 330 [150] | | | 330 [150] | | | | 330 [150] | | |
| Calcium Chloride, lb [kg] | 21.9 [9.93] | | | 21.9 [9.93] | | | 21.9 [9.93] | | | 21.9 [9.93] | | | | 21.9 [9.93] | | |
| DEEP-TREAT, lb [kg] | 3 [1.36] | | | 3 [1.36] | | | 3 [1.36] | | | 3 [1.36] | | 6[2.72] | | 3[1.36] | | |
| Mixed 15 minutes on a Silverson L4RT at 7000 r pm & Hot Rolled for 16 hours at 150 °F [65.6°C] Before Testing | | | | | | | | | | | | | | | | |
| Hot rolled @250°F[121° C], hrs | - | 16 | | - | 16 | | - | 16 | | - | 16 | | | - | 16 | |

| ***Temperature, °F[°C]*** | ***120[48. 9]*** | ***120[48. 9]*** | ***40[4.4 4]*** | ***120[48. 9]*** | ***120[48. 9]*** | ***40[4.4 4]*** | ***120[48. 9]*** | ***120[48. 9]*** | ***40[4.4 4]*** | ***120[48. 9]*** | ***120[48. 9]*** | | ***40[4.4 4]*** | ***120[48. 9]*** | ***120[48. 9]*** | ***40[4.4 4]*** |
|---|---|---|---|---|---|---|---|---|---|---|---|---|---|---|---|---|
| Plastic viscosity, cP [Pa·s] | 23 [0.023] | 24 [0.024] | 80 [0.08] | 27 [0.027] | 27 [0.027] | 91 [0.091 ] | 35 [0.035] | 33 [0.033] | 113 [0.113] | 33 [0.033] | 42 [0.042] | | 129 [0.129 ] | 27 [0.027] | 26 [0.026] | 72 [0.072] |
| Yield point, lb/100 ft²[kg/m²] | 15 [0.632] | 8 [0.337] | 18 [0.758 ] | 14 [0.589] | 8 [0.337] | 31 [1.31] | 15 [0.632] | 11 [0.463] | 42 [1.77] | 21 [0.884] | 14 [0.589] | | 42 [1.77] | 14 [0.589] | 12 [0.505] | 24 [1.01] |
| 10 Sec gel, lb/100 ft² [kg/m²] | 8 [0.337] | 6 [0.253] | 7 [0.295 ] | 8 [0.337] | 6 [0.253] | 9 [0.379] | 9 [0.379] | 7 [0.295] | 23 [0.968] | 14 [0.589] | 10 [0.421] | | 22 [0.926] | 7 [0.295] | 7 [0.295] | 13 [0.547] |
| 10 Min gel, lb/100 ft²[kg/m²] | 9 [0.379] | 8 [0.337] | 11 [0.463] | 10 [0.421] | 7 [0.295] | 14 [0.589] | 13 [0.547] | 12 [0.505] | 56 [2.36] | 21 [0.884] | 17 [0.7161 | | 34 [1.43] | 9 [0.379] | 9 [0.379] | 15 [0.63 2] |
| Electrical Stability, v | 690 | 235 | - | 680 | 284 | - | 650 | 262 | - | 765 | 320 | | - | 669 | 630 | - |
| HTHP filtrate @250°F [121°C], ml | 2.4 | 2.4 | | 1.6 | 3.6 | | 1.2 | 2.0 | | 0.6 | 0.0 | | | 2.0 | 1.6 | |

| Fann 35 dial readings | | | | | | | | | | | | | | | | |
|---|---|---|---|---|---|---|---|---|---|---|---|---|---|---|---|---|
| 600 rpm | 61 | 56 | 178 | 68 | 62 | 213 | 85 | 77 | 268 | 87 | 98 | | 300 | 68 | 64 | 168 |
| 300 rpm | 38 | 32 | 98 | 41 | 35 | 122 | 50 | 44 | 155 | 54 | 56 | | 171 | 41 | 38 | 96 |
| 200 rpm | 29 | 24 | 69 | 32 | 26 | 87 | 38 | 33 | 113 | 42 | 44 | | 123 | 32 | 30 | 72 |
| 100 rpm | 20 | 15 | 38 | 22 | 17 | 50 | 25 | 21 | 68 | 29 | 29 | | 74 | 22 | 20 | 45 |
| 6 rpm | 7 | 5 | 7 | 8 | 6 | 10 | 9 | 7 | 19 | 13 | 10 | | 20 | 8 | 8 | 14 |
| 3 rpm | 6 | 4 | 6 | 7 | 5 | 8 | 8 | 6 | 17 | 12 | 9 | | 17 | 7 | 7 | 12 |

**TABLE 13**

| ***Summary of Contamination Results*** | | | | | | | | | | | | | | | |
|---|---|---|---|---|---|---|---|---|---|---|---|---|---|---|---|
| ***PETROFREE SF: 14lb*/*gal[1680kg*/*m³]; 75*/*25 OWR with 250,000ppm WPS*** | | | | | | | | | | | | | | | |
| **Sample Mark** | ****A** | | ****B** | | ****C** | | **D** | | ****E** | | | | | | |
| SF BASE bbl [m³] | 0.516 [0.08204] | | 0.516 [0.08204] | | 0.516 [0.08204] | | 0.516 [0.08204] | | 0.516 [0.08204] | | | | | | |
| Freshwater, bbl [m³] | 0.181 [0.02878] | | 0.181 [0.02878] | | 0.181 [0.02878] | | 0.181 [0.02878] | | 0.181 [0.02878] | | | | | | |
| GELTONE II, lb [kg] | 3 [1.36] | | 3 [1.36] | | 3 [1.36] | | 3 [1.36] | | 3 [1.36] | | | | | | |
| SUSPENTONE, lb [kg] | 1 [0.454] | | 1 [0.454] | | 1 [0.454] | | 1 [0.454] | | 1 [0.454] | | | | | | |
| LE MUL, lb[kg] | 4[1.81] | | - | | - | | - | | - | | | | | | |
| BDF-257, lb [kg] | - | | 3.5 [1.59] | | 4.9 [2.22] | | 7 [3.18] | | - | | | | | | |
| BDF-258, lb [kg] | - | | - | | - | | - | | 3 [1.36] | | | | | | |
| LE SUPERMUL, lb [kg] | 6 [2.72] | | 4.8 [2.18] | | 2.9 [1.32] | | - | | - | | | | | | |
| Lime, lb [kg] | 5 [2.27] | | 5 [2.27] | | 5 [2.27] | | 18 [8.16] | | 8 [3.63] | | | | | | |
| DURATONE HT, lb [kg] | 7 [3.18] | | 7 [3.18] | | 7 [3.18] | | 7 [3.18] | | 7 [3.18] | | | | | | |
| BAROID®, lb [kg] | 330[150] | | 330 [150] | | 330 [150] | | 330 [150] | | 330 [150] | | | | | | |
| Calcium Chloride, lb [kg] | 21.9 [9.93] | | 21.9 [9.93] | | 21.9 [9.93] | | 21.9 [9.93] | | 21.9 [9.93] | | | | | | |
| DEEP-TREAT, lb [kg] | 3 [1.36] | | 3 [1.36] | | 3 [1.36] | | 6 [2.72] | | 3 [1.36] | | | | | | |
| | | | | | | | | | | | | | | | |
| *Base mud (HR@250°F [121°C]), bbl [m³] | 1.0 [0.16] | 0.8 [0.13] | 1.0 [0.16] | 0.8 [0.13] | 1.0 [0.16] | 0.8 [0.13] | 1.0 [0.16] | 0.8 [0.13] | 1.0 [0.16] | 0.8 [0.13] | | | | | |
| Rev Dust, lb [kg] | 45 [20.4] | - | 45 [20.4] | - | 45 [20.4] | - | 45 [20.4] | - | 45 [20.4] | - | | | | | |
| 15%wt NaCl brin, bbl [m³] | - | 0.2 [0.03] | - | 0.2 [0.03] | - | 0.2 [0.03] | - | 0.2 [0.03] | - | 0.2 [0.03] | | | | | |
| | | | | | | | | | | | | | | | |
| Hot rolled @250°F [121°C],hr | 16 | | | | | | | | | | | | | | |

| ***Temperature, °F[°C]*** | ***120[48.9]*** | ***120[48.9]*** | ***40[4.44]*** | ***120[489]*** | ***120[48.9]*** | ***40[4.44 1*** | ***120[48.9]*** | ***120[48.9]*** | ***40[4. 44]*** | ***120[48.9]*** | ***120[48.9]*** | ***40[4. 44]*** | ***120[48.9]*** | ***120[48.9]*** | ***40[4.44]*** |
|---|---|---|---|---|---|---|---|---|---|---|---|---|---|---|---|
| Plastic viscosity, cP [Pa·s] | 37 [0.037] | 42 [0.042] | 108 [0.108] | 34 [0.034] | 45 [0.045] | N/A | 55 [0.055] | 58 [0.058] | N/A | N/A | 84 [0.084] | N/A | 49 [0.049] | 43 [0.043] | 113 [0.113] |
| Yield point, lb/100 ft² [kg/m²] | 8 [0.337] | 7 [0.295] | 26 [1.09] | 10 [0.421] | 12 [0.505] | N/A | 25 [1.05] | 37 [1.56] | N/A | N/A | 53 [2.23] | N/A | 24 [1.01] | 20 [0.842] | 43 [1.81] |
| 10 Sec gel, lb/100 ft²[kg/m²] | 7 [0.295] | 6 [0.253] | 9 [0.379] | 8 [0.337] | 6 [0.253] | 13 [0.547] | 14 [0.589] | 16 [0.674] | 46 [1.94] | 54 [2.27] | 27 [1.14] | 49 [2.06] | 16 [0.674] | 13 [0.547] | 19 [0.8] |
| 10 Min gel, lb/100 ft²[kg/m²] | 10 [0.421] | 10 [0.421] | 12 [0.505] | 10 [0.421] | 9 [0.379] | 18 [0.758] | 38 [1.6] | 28 [1.18] | - | 80 [3.37] | 37 [1.56] | 85 [3.58] | 36 [1.52] | 13 [0.547] | 20 [0.842] |
| Electrical Stability, v | 488 | 77 | - | 553 | 116 | - | 575 | 145 | - | 1500 | 150 | - | 884 | 393 | - |
| HTHP filtrate @250°F [121°C], ml | 10.4 | 7.6(0.5H₂O) | | 0.6 | 0.6 | | 1.6 | 1.6 | | 3.8 | 2.2 | | 5.2 | 2.4 | |

| Fann 35 dial readings | | | | | | | | | | | | | | | |
|---|---|---|---|---|---|---|---|---|---|---|---|---|---|---|---|
| 600 rpm | 82 | 87 | 242 | 78 | 102 | O/S | 135 | 153 | O/S | O/S | 221 | O/S | 122 | 106 | 269 |
| 300 rpm | 45 | 49 | 134 | 44 | 57 | 216 | 80 | 95 | 284 | 202 | 137 | 299 | 73 | 63 | 156 |
| 200 rpm | 33 | 36 | 94 | 32 | 41 | 154 | 59 | 72 | 214 | 160 | 105 | 230 | 56 | 48 | 116 |
| 100 rpm | 20 | 23 | 53 | 20 | 25 | 90 | 36 | 47 | 137 | 112 | 70 | 152 | 38 | 32 | 72 |
| 6 rpm | 5 | 7 | 10 | 6 | 6 | 16 | 10 | 15 | 41 | 47 | 25 | 50 | 15 | 12 | 21 |
| 3 rpm | 4 | 6 | 8 | 5 | 5 | 12 | 8 | 13 | 37 | 43 | 15 | 44 | 14 | 11 | 19 |

| | | | | | | | | | | | | | | | |
|---|---|---|---|---|---|---|---|---|---|---|---|---|---|---|---|
| Note: O/S indicates off-scale reading, or >300 *These contaminated samples were made up with fluid that was previously hot rolled for 16 hours at 250°F [121°C] ** = comparative example | | | | | | | | | | | | | | | |

## Claims

1. A drilling fluid comprising a wetting agent and a product produced by the Diels-Alder reaction of dienophiles with a mixture of fatty acids and resin acids, wherein the drilling fluid is free of any carboxylic acid-terminated polyamide.

2. A drilling fluid according to claim 1 wherein said drilling fluid is oil or synthetic based.

3. A drilling fluid according to claim 1 or 2, wherein said dienophiles are selected from: carboxylic acids, polycarboxylic acids, acid anhydrides, and mixtures thereof.

4. A drilling fluid according to claim 1, 2 or 3, wherein said mixture of fatty acids and resin acids are derived from the distillation of tall oil, preferably crude tall oil.

5. A drilling fluid according to claim 1, 2, 3 or 4, wherein said dienophiles are maleic anhydrides.

6. A drilling fluid according to any preceding claim, wherein said mixture has a ratio of fatty acids to resins acids ranging from 4:1 to 1:1, preferably of 2:1.

7. A drilling fluid according to any preceding claim, wherein the ratio of wetting agent to said mixture is 1:5 to 1:1, preferably 1:2 to 1:3.

8. A drilling fluid according to claim 1 wherein said product is saponified, and preferably said saponification is effected with calcium chloride, lime, quicklime, or other sources of calcium cations.

9. A drilling fluid according to claim 8 wherein said saponification occurs in situ.

10. A drilling fluid according to claim 8 wherein said saponification occurs before said blend is added to said drilling fluid.

11. A drilling fluid according to any preceding claim further comprising lime, calcium chlorides, quicklime, or other saponifying agents.

12. A method for drilling a borehole in a subterranean formation, said method comprising employing an oil or synthetic based drilling fluid comprising an invert emulsion and an additive comprising a wetting agent and a product produced by the Diels-Alder reaction of compounds or reagents with a mixture of fatty acids and resin acids wherein said compounds or reagents are selected from the group consisting of carboxylic acids, polycarboxylic acids, acid anhydrides and combinations or mixes thereof, wherein the drilling fluid is free of any carboxylic acid-terminated polyamide.

13. A method according to claim 12 wherein said product is added to said drilling fluid in the borehole, and preferably said wetting agent and said product are added to said drilling fluid in the borehole.

14. A method according to claim 12, wherein said product and/or wetting agent is added to said drilling fluid at the well surface.

15. A method according to claim 12 wherein said product and/or wetting agent is added to said drilling fluid when the drilling fluid is prepared.

16. A method according to any one of claims 12 to 15 wherein said drilling comprises at least one step selected from: drilling a borehole in a subterranean formation; completing a borehole in a subterranean formation; testing a borehole in a subterranean formation; servicing a borehole in a subterranean formation; and producing fluid from a borehole in a subterranean formation.

17. A method for improving or facilitating the emulsification of a drilling fluid, said method comprising adding to said drilling fluid a wetting agent and a product produced by the Diels- Alder reaction of dienophiles with a mixture of fatty acids and resin acids, wherein the drilling fluid is free of any carboxylic acid-terminated polyamide.

18. A method according to claim 12 or 17 wherein the wetting agent and the product are blended together before addition to the drilling fluid.

19. A method for improving the filtration properties of an oil or synthetic based drilling fluid or a drilling fluid comprising an invert emulsion, said method comprising adding to said drilling fluid a wetting agent and a product produced by the Diels-Alder reaction of dienophiles with a mixture of fatty acids and resin acids, wherein the drilling fluid is free of any carboxylic acid-terminated polyamide.

20. A method according to claim 19 wherein said wetting agent and said product are blended in situ the drilling fluid.

21. A method for improving the electrical stability of an oil or synthetic based drilling fluid, or a drilling fluid comprising an invert emulsion, said method comprising adding to said fluid a wetting agent and a product produced by the Diels-Alder reaction of dienophiles with a mixture of fatty acids and resin acids, wherein the drilling fluid is free of any carboxylic acid-terminated polyamide.

## Patentansprüche

1. Bohrflüssigkeit, die ein Benetzungsmittel und ein Produkt, das durch die Diels-Alder-Reaktion von Dienophilen mit einem Gemisch von Fettsäuren und Harzsäuren produziert wird, umfasst, wobei die Bohrflüssigkeit frei von jeglichem carbonsäureterminiertem Polyamid ist.

2. Bohrflüssigkeit nach Anspruch 1, wobei die Bohrflüssigkeit öl- oder synthetikbasiert ist.

3. Bohrflüssigkeit nach Anspruch 1 oder 2, wobei die Dienophile aus folgenden ausgewählt sind: Carbonsäuren, Polycarbonsäuren, Säureanhydriden und Gemischen davon.

4. Bohrflüssigkeit nach Anspruch 1, 2 oder 3, wobei das Gemisch von Fettsäuren und Harzsäuren von der Destillation von Tallöl, vorzugsweise rohem Tallöl abgeleitet ist.

5. Bohrflüssigkeit nach Anspruch 1, 2, 3 oder 4, wobei die Dienophile Maleinsäureanhydride sind.

6. Bohrflüssigkeit nach einem vorhergehenden Anspruch, wobei das Gemisch ein Verhältnis von Fettsäuren zu Harzsäuren aufweist, das von 4:1 bis 1:1, vorzugsweise 2:1 reicht.

7. Bohrflüssigkeit nach einem vorhergehenden Anspruch, wobei das Verhältnis von Benetzungsmittel zu dem Gemisch 1:5 bis 1:1, vorzugsweise 1:2 bis 1:3 beträgt.

8. Bohrflüssigkeit nach Anspruch 1, wobei das Produkt verseift ist und vorzugsweise die Verseifung mit Calciumchlorid, Kalk, gebranntem Kalk oder anderen Calciumkationquellen durchgeführt wird.

9. Bohrflüssigkeit nach Anspruch 8, wobei die Verseifung in situ erfolgt.

10. Bohrflüssigkeit nach Anspruch 8, wobei die Verseifung erfolgt, bevor die Mischung der Bohrflüssigkeit zugegeben wird.

11. Bohrflüssigkeit nach einem vorhergehenden Anspruch, die weiterhin Kalk, Calciumchloride, gebrannten Kalk oder andere Verseifungsmittel umfasst.

12. Verfahren zum Bohren eines Bohrlochs in einer unterirdischen Formation, wobei das Verfahren das Einsetzen einer öl- oder synthetikbasierten Bohrflüssigkeit umfasst, die eine Bohrspülung und ein Additiv umfasst, das ein Benetzungsmittel und ein Produkt, das durch die Diels-Alder-Reaktion von Verbindungen oder Reagenzien mit einem Gemisch von Fettsäuren und Harzsäuren produziert wird, umfasst, wobei die Verbindungen und Reagenzien aus der Gruppe bestehend aus Carbonsäuren, Polycarbonsäuren, Säureanhydriden und Kombinationen oder Gemischen davon ausgewählt sind, wobei die Bohrflüssigkeit frei von jeglichem carbonsäureterminiertem Polyamid ist.

13. Verfahren nach Anspruch 12, wobei das Produkt der Bohrflüssigkeit in dem Bohrloch zugegeben wird und vorzugsweise das Benetzungsmittel und das Produkt der Bohrflüssigkeit in dem Bohrloch zugegeben werden.

14. Verfahren nach Anspruch 12, wobei das Produkt und/oder das Benetzungsmittel der Bohrflüssigkeit an der Bohrungsoberfläche zugegeben werden.

15. Verfahren nach Anspruch 12, wobei das Produkt und/oder das Benetzungsmittel der Bohrflüssigkeit zugegeben werden, während die Bohrflüssigkeit hergestellt wird.

16. Verfahren nach einem der Ansprüche 12 bis 15, wobei das Bohren mindestens einen Schritt umfasst, der aus folgenden ausgewählt ist: Bohren eines Bohrlochs in einer unterirdischen Formation; Komplettieren eines Bohrlochs in einer unterirdischen Formation; Testen eines Bohrlochs in einer unterirdischen Formation; Warten eines Bohrlochs in einer unterirdischen Formation und Produzieren einer Flüssigkeit aus einem Bohrloch in einer unterirdischen Formation.

17. Verfahren zum Verbessern oder Vereinfachen der Emulgierung einer Bohrflüssigkeit, wobei das Verfahren das Zugeben eines Benetzungsmittels und eines Produkts, das durch die Diels-Alder-Reaktion von Dienophilen mit einem Gemisch von Fettsäuren und Harzsäuren produziert wird, zu der Bohrflüssigkeit umfasst, wobei die Bohrflüssigkeit frei von jeglichem carbonsäureterminiertem Polyamid ist.

18. Verfahren nach Anspruch 12 oder 17, wobei das Benetzungsmittel und das Produkt vor der Zugabe zu der Bohrflüssigkeit miteinander vermischt werden.

19. Verfahren zum Verbessern der Filtrationseigenschaften einer öl- oder synthetikbasierten Bohrflüssigkeit oder einer Bohrflüssigkeit, die eine Bohrspülung umfasst, wobei das Verfahren das Zugeben eines Benetzungsmittels und eines Produkts, das durch die Diels-Alder-Reaktion von Dienophilen mit einem Gemisch von Fettsäuren und Harzsäuren produziert wird, zu der Bohrflüssigkeit umfasst, wobei die Bohrflüssigkeit frei von jeglichem carbonsäureterminiertem Polyamid ist.

20. Verfahren nach Anspruch 19, wobei das Benetzungsmittel und das Produkt in situ mit der Bohrflüssigkeit vermischt werden.

21. Verfahren zum Verbessern der elektrischen Stabilität einer öl- oder synthetikbasierten Bohrflüssigkeit oder einer Bohrflüssigkeit, die eine Bohrspülung umfasst, wobei das Verfahren das Zugeben eines Benetzungsmittels und eines Produkts, das durch die Diels-Alder-Reaktion von Dienophilen mit einem Gemisch von Fettsäuren und Harzsäuren produziert wird, zu der Bohrflüssigkeit umfasst, wobei die Bohrflüssigkeit frei von jeglichem carbonsäureterminiertem Polyamid ist.

## Revendications

1. Fluide de forage comprenant un agent mouillant et un produit produit par la réaction de Diels-Alder de diénophiles avec un mélange d'acides gras et d'acides résiniques, le fluide de forage étant exempt de tout polyamide à terminaison acide carboxylique.

2. Fluide de forage selon la revendication 1, ledit fluide de forage étant à base d'huile ou synthétique.

3. Fluide de forage selon la revendication 1 ou 2, dans lequel lesdits diénophiles sont choisis parmi : les acides carboxyliques, les acides polycarboxyliques, les anhydrides d'acides et les mélanges de ceux-ci.

4. Fluide de forage selon la revendication 1, 2 ou 3, dans lequel ledit mélange d'acides gras et d'acides résiniques est dérivé de la distillation de tallöl, de préférence de tallöl brut.

5. Fluide de forage selon la revendication 1, 2, 3 ou 4, dans lequel lesdits diénophiles sont des anhydrides maléiques.

6. Fluide de forage selon n'importe quelle revendication précédente, dans lequel ledit mélange a un rapport des acides gras aux acides résiniques allant de 4:1 à 1:1, de préférence de 2:1.

7. Fluide de forage selon n'importe quelle revendication précédente, dans lequel le rapport de l'agent mouillant audit mélange est de 1:5 à 1:1, de préférence de 1:2 à 1:3.

8. Fluide de forage selon la revendication 1 dans lequel ledit produit est saponifié et de préférence ladite saponification est effectuée avec du chlorure de calcium, de la chaux, de la chaux vive ou d'autres sources de cations calcium.

9. Fluide de forage selon la revendication 8 dans lequel ladite saponification a lieu *in situ.*

10. Fluide de forage selon la revendication 8 dans lequel ladite saponification a lieu avant que ledit mélange est ajouté audit fluide de forage.

11. Fluide de forage selon n'importe quelle revendication précédente comprenant en outre de la chaux, des chlorures de calcium, de la chaux vive ou d'autres agents de saponification.

12. Procédé pour forer un trou de forage dans une formation souterraine, ledit procédé comprenant l'emploi d'un fluide de forage à base d'huile ou synthétique comprenant une émulsion inverse et un additif comprenant un agent mouillant et un produit produit par la réaction de Diels-Alder de composés ou réactifs avec un mélange d'acides gras et d'acides résiniques, dans lequel lesdits composés ou réactifs sont choisis dans le groupe constitué par les acides carboxyliques, les acides polycarboxyliques, les anhydrides d'acides et les associations et mélanges de ceux-ci, dans lequel le fluide de forage est exempt de tout polyamide à terminaison acide carboxylique.

13. Procédé selon la revendication 12 dans lequel ledit produit est ajouté audit fluide de forage dans le trou de forage et de préférence ledit agent mouillant et ledit produit sont ajoutés audit fluide de forage dans le trou de forage.

14. Procédé selon la revendication 12, dans lequel ledit produit et/ou agent mouillant est ajouté audit fluide de forage au niveau de la surface du puits.

15. Procédé selon la revendication 12 dans lequel ledit produit et/ou agent mouillant est ajouté audit fluide de forage lorsque le fluide de forage est préparé.

16. Procédé selon l'une quelconque des revendications 12 à 15 dans lequel ledit forage comprend au moins une étape choisie parmi : le forage d'un trou de forage dans une formation souterraine ; la complétion d'un trou de forage dans une formation souterraine ; le test d'un trou de forage dans une formation souterraine ; l'entretien d'un trou de forage dans une formation souterraine ; et la production de fluide à partir d'un trou de forage dans une formation souterraine.

17. Procédé pour améliorer ou faciliter l'émulsification d'un fluide de forage, ledit procédé comprenant l'ajout audit fluide de forage d'un agent mouillant et d'un produit produit par la réaction de Diels-Alder de diénophiles avec un mélange d'acides gras et d'acides résiniques, dans lequel le fluide de forage est exempt de tout polyamide à terminaison acide carboxylique.

18. Procédé selon la revendication 12 ou 17 dans lequel l'agent mouillant et le produit sont mélangés ensemble avant ajout au fluide de forage.

19. Procédé pour améliorer les propriétés de filtration d'un fluide de forage à base d'huile ou synthétique ou d'un fluide de forage comprenant une émulsion inverse, ledit procédé comprenant l'ajout audit fluide de forage d'un agent mouillant et d'un produit produit par la réaction de Diels-Alder de diénophiles avec un mélange d'acides gras et d'acides résiniques, dans lequel le fluide de forage est exempt de tout polyamide à terminaison acide carboxylique.

20. Procédé selon la revendication 19 dans lequel ledit agent mouillant et ledit produit sont mélangés *in situ* dans le fluide de forage.

21. Procédé pour améliorer la stabilité électrique d'un fluide de forage à base d'huile ou synthétique, ou d'un fluide de forage comprenant une émulsion inverse, ledit procédé comprenant l'ajout audit fluide d'un agent mouillant et d'un produit produit par la réaction de Diels-Alder de diénophiles avec un mélange d'acides gras et d'acides résiniques, dans lequel le fluide de forage est exempt de tout polyamide à terminaison acide carboxylique.
